# EUROPEAN PATENT APPLICATION

(11) **EP 4 707 564 A1**
(43) Date of publication of application: **11.03.2026**
(21) Application number: 24859445.9
(22) Date of filing: 13.08.2024
(51) Int. Cl.: F02C 6/18, F02C 3/22, F02C 3/30, F02C 7/00

(54) **DUCT BURNER, GAS TURBINE SYSTEM, AND COMBUSTION METHOD FOR DUCT BURNER**

(30) Priority: 28.08.2023 JP 2023137784
(71) Applicant: Mitsubishi Heavy Industries Power IDS Co., Ltd., Yokohama-shi, Kanagawa 2318715 (JP)
(72) Inventor: KOZUMA, Tomiaki, Yokohama-shi, Kanagawa 231-0012 (JP); TSUMURA, Toshikazu, Yokohama-shi, Kanagawa 231-0012 (JP); TAKASHIMA, Yohei, Yokohama-shi, Kanagawa 231-0012 (JP); HARADA, Yusuke, Yokohama-shi, Kanagawa 231-0012 (JP); IMAI, Aiko, Yokohama-shi, Kanagawa 231-0012 (JP); KABUKI, Yutaka, Yokohama-shi, Kanagawa 231-0012 (JP); TAGUCHI, Yuzo, Yokohama-shi, Kanagawa 231-0012 (JP); SEKIGUCHI, Shinichi, Yokohama-shi, Kanagawa 231-0012 (JP); TANAKA, Ryuichiro, Yokohama-shi, Kanagawa 231-0012 (JP)
(74) Representative: Henkel & Partner mbB
(86) International application number: PCT/JP2024/028869
(87) International publication number: WO 2025/047409

(57) **Abstract**

The duct burner according to the present invention is disposed in an exhaust gas flow path through which exhaust gas discharged from a gas turbine flows and is configured so that exhaust gas having a temperature of 500 degrees or less and an oxygen concentration of 14% or less flows in. The duct burner includes a nozzle for ejecting a gas fuel containing hydrogen to the exhaust gas flow path.

## Description

### TECHNICAL FIELD

This disclosure relates to a duct burner, a gas turbine system including the duct burner, and a combustion method for the duct burner.

The present application claims priority based on Japanese Patent Application No. 2023-137784 filed on August 28, 2023, the entire content of which is incorporated herein by reference.

### BACKGROUND ART

For example, as disclosed in Non-Patent Document 1, in a gas turbine cogeneration system including a gas turbine and a heat recovery steam generator, a duct burner may be installed upstream of the heat recovery steam generator to increase heat recovery in the heat recovery steam generator. The duct burner injects fuel into exhaust gas discharged from the gas turbine and uses oxygen contained in the exhaust gas for combustion heating.

### Citation List

### Non-Patent Literature

Non-Patent Document 1: Journal of IHI technologies Vol. 49, No. 2 (2009-6) P103-P107

### SUMMARY

### Problems to be Solved

The amount of nitrogen oxides (NOx) in exhaust gas should be as low as possible. However, Non-Patent Document 1 neither discloses nor suggests any technique to reduce the amount of NOx in exhaust gas by the duct burner.

The present disclosure was made in view of the above, and an object thereof is to provide a duct burner and a combustion method for the duct burner whereby it is possible to reduce the amount of nitrogen oxides in exhaust gas.

### Solution to the Problems

In order to achieve the above object, the present disclosure provides a duct burner disposed in an exhaust gas passage through which exhaust gas discharged from a gas turbine flows and configured such that the exhaust gas having a temperature of 500°C or lower and an oxygen concentration of 14% or less flows in, including a nozzle for injecting gas fuel containing hydrogen into the exhaust gas passage.

In order to achieve the above object, the present disclosure provides a combustion method for a duct burner, including a step of forming a flame by injecting gas fuel into exhaust gas discharged from a gas turbine and having a temperature of 500°C or lower and an oxygen concentration of 14% or less.

### Advantageous Effects

With the duct burner and the combustion method for the duct burner of the present disclosure, it is possible to reduce the amount of nitrogen oxides in exhaust gas.

### BRIEF DESCRIPTION OF DRAWINGS

FIG. 1 is a schematic configuration diagram of a gas turbine system with a duct burner according to some embodiments.
FIG. 2 is a schematic configuration diagram of a duct burner according to the first embodiment.
FIG. 3 is a graph showing a relationship between inlet temperature and NOx reduction rate.
FIG. 4 is a schematic configuration diagram of a modified example of an exhaust gas circulation line.
FIG. 5 is a schematic diagram of a configuration example of an exhaust gas pipe.
FIG. 6 is a schematic cross-sectional view as viewed from the direction of arrows A-A in FIG. 5.
FIG. 7 is a schematic configuration diagram of a duct burner according to the second embodiment.
FIG. 8 is a schematic configuration diagram of a nozzle according to the second embodiment.
FIG. 9 is a graph showing a relationship between inlet temperature and NOx reduction rate.
FIG. 10 is a graph showing a relationship between inlet temperature and NOx reduction rate.
FIG. 11 is a flowchart of a combustion method for a duct burner.

### DETAILED DESCRIPTION

Hereinafter, a duct burner and a combustion method for the duct burner according to embodiments of the present disclosure will be described with reference to the drawings. The following embodiments are illustrative and not intended to limit the present disclosure, and various modifications are possible within the scope of technical ideas of the present disclosure.

### <Gas turbine>

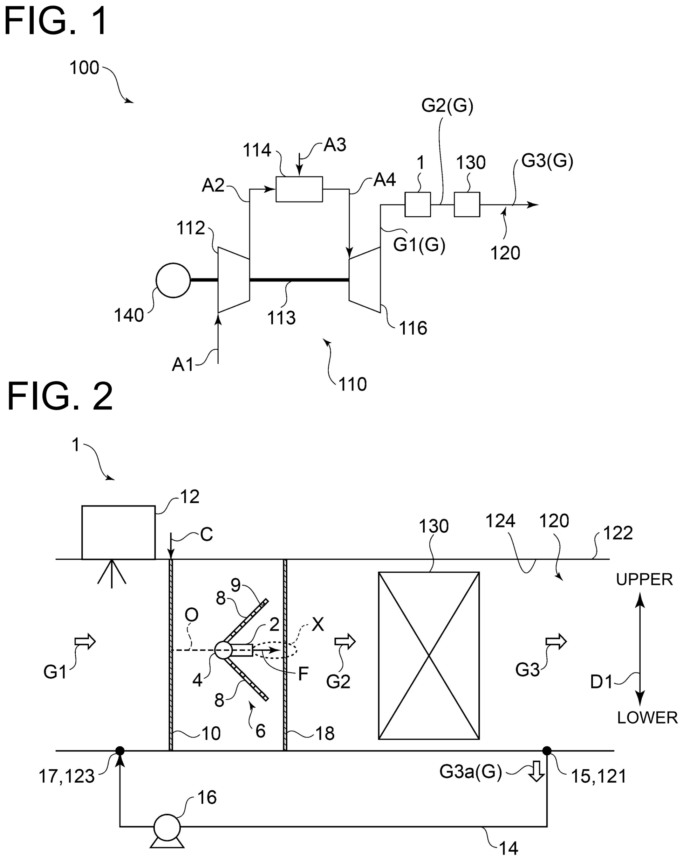

FIG. 1 is a schematic configuration diagram of a gas turbine system 100 with a duct burner 1 according to some embodiments. As shown in FIG. 1, the gas turbine system 100 includes a gas turbine 110, an exhaust gas passage 120 through which exhaust gas G discharged from the gas turbine 110 flows, a heat recovery steam generator 130 disposed in the exhaust gas passage 120, and a duct burner 1 according to some embodiments.

The gas turbine 110 includes a compressor 112, a combustor 114, and a turbine 116. The compressor 112 compresses air A1 supplied from the outside to produce compressed air A2. The combustor 114 produces combustion gas A4 by injecting fuel A3 to the compressed air A2 produced by the compressor 112 and burning the mixture. The fuel A3 may be, but is not limited to, hydrogen gas. In some embodiments, the fuel A3 is hydrocarbon gas, such as LPG or LNG.

The turbine 116 is driven to rotate with the passage of the combustion gas A4 produced by the combustor 114 and converts thermal energy of the combustion gas A4 into rotational energy. The turbine 116 is connected to the compressor 112 via a rotational shaft 113 and transmits rotational energy to the compressor 112. The compressor 112 is driven by rotational energy of the turbine 116. In the embodiment shown in FIG. 1, the gas turbine system 100 further includes a generator 140 connected to the rotational shaft 113. The generator 140 generates power from rotational energy of the turbine 116.

The exhaust gas passage 120 is defined by an inner wall surface 124 of a duct 122 of cylindrical shape (see FIG. 2). The heat recovery steam generator 130 generates steam by heating feed water using thermal energy of the exhaust gas G. The destination of the exhaust gas G that has passed through the heat recovery steam generator 130 may be for example, but is not limited to, a CO2 absorption tower, where CO2 is absorbed from the exhaust gas G into an absorption solution.

The duct burner 1 is disposed upstream of the heat recovery steam generator 130 in the exhaust gas passage 120. The duct burner 1 is configured such that the exhaust gas G having a temperature of 500°C or lower and an oxygen concentration of 14% or less flows in. In some embodiments, the duct burner 1 further includes an adjustment device (heat transfer tube 10, spraying device 12, and exhaust gas circulation line 14 described below) to adjust the temperature of the exhaust gas G and the oxygen concentration of the exhaust gas G. In some embodiments, the duct burner 1 is configured such that the exhaust gas G having a temperature of 500°C or lower and an oxygen concentration of 10% or less flows in. In some embodiments, the gas turbine system 100 includes an exhaust gas adjustment device that adjusts the temperature of the exhaust gas G below 500°C and the oxygen concentration below 14%. In this case, the duct burner 1 does not have to include the adjustment device. That is, the duct burner 1 is merely placed in the exhaust gas passage 120, and the exhaust gas G having a temperature of 500°C or lower and an oxygen concentration of 10% flows into the duct burner.

In the following, the exhaust gas G that flows upstream of the nozzle 2 in the exhaust gas passage 120 is referred to as inlet exhaust gas G1 (G), the exhaust gas G that flows downstream of the nozzle 2 and upstream of the heat recovery steam generator 130 in the exhaust gas passage 120 is referred to as outlet exhaust gas G2 (G), and the exhaust gas G that flows downstream of the heat recovery steam generator 130 in the exhaust gas passage 120 is referred to as heat-recovered exhaust gas G3 (G). In an embodiment, the inlet exhaust gas G1 is the exhaust gas G that flows through the inlet of the duct burner 1 or immediately upstream of the inlet of the duct burner 1. The inlet of the duct burner 1 is located so that it overlaps a fuel supply pipe 4, which will be described below, in the direction of extension of the exhaust gas passage 120, for example. Immediately upstream of the inlet of the duct burner 1 is between the fuel supply pipe 4 and the adjustment device in the exhaust gas passage 120.

### <First Embodiment>

### (Configuration)

The configuration of the duct burner 1 according to the first embodiment will be described. FIG. 2 is a schematic configuration diagram of the duct burner 1 according to the first embodiment. As shown in FIG. 2, the duct burner 1 includes a nozzle 2 for injecting gas fuel F containing hydrogen into the exhaust gas passage 120. In the first embodiment, the duct burner 1 further includes a fuel supply pipe 4 and a flame holder 6. The fuel supply pipe 4 has a cylindrical shape, through which gas fuel F flows. The fuel supply pipe 4 extends in the exhaust gas passage 120 and is connected to one or more nozzles 2. The flame holder 6 has a pair of plate members 8 diverging from the central axis O of the nozzle 2. The pair of plate members 8 is arranged along the vertical direction D1. Each of the plate members 8 has a through hole 9.

In the present disclosure, the "gas fuel F containing hydrogen" includes gas fuel F containing hydrogen and fuel other than hydrogen (co-firing) and gas fuel F containing only hydrogen (single-firing). Further, the gas fuel F containing hydrogen and fuel other than hydrogen can further be classified into fuel containing hydrogen as a principal component (the volume fraction of hydrogen is at least 50%) and fuel containing fuel other than hydrogen as a principal component (the volume fraction of hydrogen is less than 50%). The "gas fuel F containing hydrogen" includes all of these cases.

As shown in FIG. 2, in the first embodiment, the duct burner 1 further includes a heat transfer tube 10 disposed upstream of the nozzle 2 in the exhaust gas passage 120. The heat transfer tube 10 has a cylindrical shape, through which coolant C colder than the inlet exhaust gas G1 flows. The coolant C may be taken from, for example, but is not limited to, feed water supplied to the heat recovery steam generator 130. In the first embodiment, the coolant C flows from top to bottom, but the present disclosure is not limited to this embodiment. The coolant C may flow from bottom to top or left to right.

As shown in FIG. 2, in the first embodiment, the duct burner 1 further includes a spraying device 12 disposed upstream of the nozzle 2 in the exhaust gas passage 120. The spraying device 12 sprays water W to the inlet exhaust gas G1. In the first embodiment, the spraying device 12 is disposed upstream of the heat transfer tube 10 in the exhaust gas passage 120, but the present disclosure is not limited to this embodiment. The spraying device 12 may be disposed downstream of the heat transfer tube 10 in the exhaust gas passage 120. In the first embodiment, the spraying device 12 is disposed at the top of the duct 122 and sprays water W downward, but the present disclosure is not limited to this embodiment. The spraying device 12 may spray water W upward, to the left, or to the right. In some embodiments, the spraying device 12 sprays steam instead of water W.

In the first embodiment, the flow direction of the coolant C flowing through the heat transfer tube 10 and the spraying direction of the water W sprayed from the spraying device 12 are both from top to bottom, but the present disclosure is not limited to this embodiment. The flow direction of the coolant C and the spraying direction of the water W may be opposite to each other.

As shown in FIG. 2, in the first embodiment, the duct burner 1 further includes an exhaust gas circulation line 14 for guiding part of the heat-recovered exhaust gas G3 (hereinafter referred to as circulating exhaust gas G3a (G)) from a portion 121 of the exhaust gas passage 120 downstream of the heat recovery steam generator 130 to a portion 123 of the exhaust gas passage 120 upstream of the nozzle 2. Each of the inlet 15 and the outlet 17 of the exhaust gas circulation line 14 is formed on the inner wall surface 124 of the duct 122. The exhaust gas circulation line 14 is equipped with a blower to deliver the circulating exhaust gas G3a to the portion of the exhaust gas passage 120 upstream of the nozzle 2. The position of the outlet 17 of the exhaust gas circulation line 14 may be determined on the basis of, for example, but is not limited to, the flow rate of the inlet exhaust gas G1 or the volume of the exhaust gas passage 120 from the outlet 17 of the exhaust gas circulation line 14 to the duct burner 1.

As shown in FIG. 2, in the first embodiment, the duct burner 1 further includes a contact pipe 18 disposed transversely to a flame X formed by combustion of the gas fuel F. The contact pipe 18 extends along the vertical direction D1 and traverses the region where the flame X is formed. This region can be estimated in advance, although it varies with the injection pressure of the gas fuel F or other factors.

### (Operation and Effect)

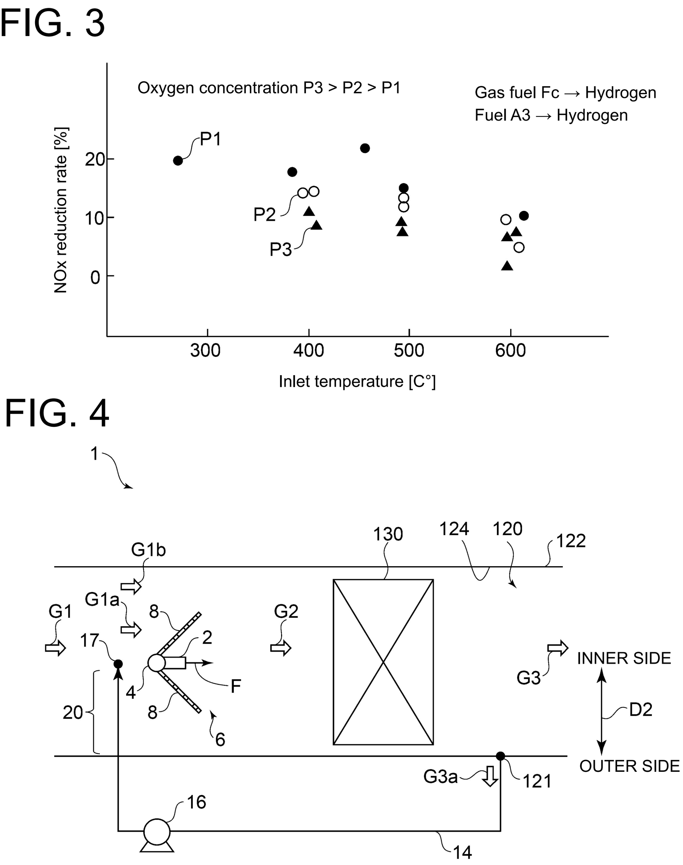

The operation and effect of the duct burner 1 according to the first embodiment will be described. FIG. 3 is a graph showing a relationship between inlet temperature and NOx reduction rate, with the horizontal axis representing inlet temperature and the vertical axis representing NOx reduction rate. The inlet temperature is the temperature of the inlet exhaust gas G1 flowing into the duct burner 1. The NOx reduction rate is the difference between the amount of NOx in the inlet exhaust gas G1 flowing into the duct burner 1 and the amount of NOx in the outlet exhaust gas G2 flowing out of the duct burner 1, divided by the amount of NOx in the inlet exhaust gas G1 flowing into the duct burner 1. A NOx reduction rate greater than 0% means that the amount of NOx in the inlet exhaust gas G1 has been reduced.

In FIG. 3, P1 has an oxygen concentration of approximately 5.5%, P2 has approximately 8%, and P3 has approximately 12.5%. The present inventors have found that, as shown in FIG. 3, when combustion heating is performed by injecting the gas fuel F containing hydrogen into the exhaust gas G having a temperature of 500°C or lower and an oxygen concentration of 14% or less, the amount of NOx in the inlet exhaust gas G1 is reduced. According to the first embodiment, the duct burner 1 is configured such that the inlet exhaust gas G1 having a temperature of 500°C or lower and an oxygen concentration of 14% or less flows in. Therefore, it is possible to provide a duct burner 1 that can reduce the amount of NOx in the inlet exhaust gas G1.

As shown in FIG. 3, the NOx reduction rate tends to be higher at lower oxygen concentrations. When the duct burner 1 is arranged in the exhaust gas passage 120 so that the oxygen concentration of the inlet exhaust gas G1 is 10% or less, it is possible to further reduce the amount of NOx in the inlet exhaust gas G1.

According to the first embodiment, the duct burner 1 includes the heat transfer tube 10 and the spraying device 12 disposed upstream of the nozzle 2 in the exhaust gas passage 120. The inlet exhaust gas G1 is thus cooled by heat exchange with the coolant C flowing through the heat transfer tube 10. Similarly, the inlet exhaust gas G1 is cooled by water W sprayed from the spraying device 12. Therefore, the temperature of the inlet exhaust gas G1 flowing into the duct burner 1 can be adjusted and lowered to 500°C or lower.

According to the first embodiment, the duct burner 1 includes the exhaust gas circulation line 14. This allows the circulating exhaust gas G3a to be returned to the portion of the exhaust gas passage 120 upstream of the nozzle 2. Since the duct burner 1 consumes oxygen contained in the inlet exhaust gas G1 to combust and heat the inlet exhaust gas G1, the oxygen content in the heat-recovered exhaust gas G3 is small. Therefore, by returning the circulating exhaust gas G3a, which is collected from the heat-recovered exhaust gas G3, to the portion of the exhaust gas passage 120 upstream of the nozzle 2, the oxygen concentration of the inlet exhaust gas G1 flowing into the duct burner 1 can be adjusted and reduced to 14% or less.

According to the first embodiment, the duct burner 1 includes the contact pipe 18. By bringing the flame X into contact with the contact pipe 18, the flame temperature can be lowered to suppress the generation of NOx due to combustion heating by the duct burner 1.

In the first embodiment, the outlet 17 of the exhaust gas circulation line 14 is formed on the inner wall surface 124 of the duct 122, but the outlet 17 of the exhaust gas circulation line 14 may be located inside the exhaust gas passage 120. FIG. 4 is a schematic configuration diagram of a modified example of the exhaust gas circulation line 14.

As illustrated in FIG. 4, the exhaust gas circulation line 14 includes an exhaust gas pipe 20 located inside the exhaust gas passage 120. The exhaust gas pipe 20 has the outlet 17 of the exhaust gas circulation line 14, which is located inward of the inner wall surface 124 of the duct 122 in the radial direction D2 of the duct 122. The exhaust gas pipe 20 extends from the inner wall surface 124 of the duct 122 inward in the radial direction D2 of the duct 122 (toward the center of the exhaust gas passage 120). In the radial direction D2 of the duct 122, the outlet 17 of the exhaust gas circulation line 14 and the duct burner 1 overlap each other.

According to the embodiment shown in FIG. 4, the exhaust gas circulation line 14 includes the exhaust gas pipe 20, which allows the outlet 17 of the exhaust gas circulation line 14 to be placed at any location inside the exhaust gas passage 120. In the radial direction of the duct 122, part G1a of the inlet exhaust gas G1, flowing in the portion of the exhaust gas passage 120 that overlaps or is close to the duct burner 1, is combusted and heated by the duct burner 1, while the remaining part G1b is not combusted and heated by the duct burner 1. Therefore, when the outlet 17 of the exhaust gas circulation line 14 and the duct burner 1 are arranged so as to overlap each other in the radial direction D2 of the duct 122, it is possible to suppress the reduction in oxygen concentration of the remaining part G1b of the inlet exhaust gas G1 and efficiently reduce the oxygen concentration of the part G1a of the inlet exhaust gas G1 below 14%.

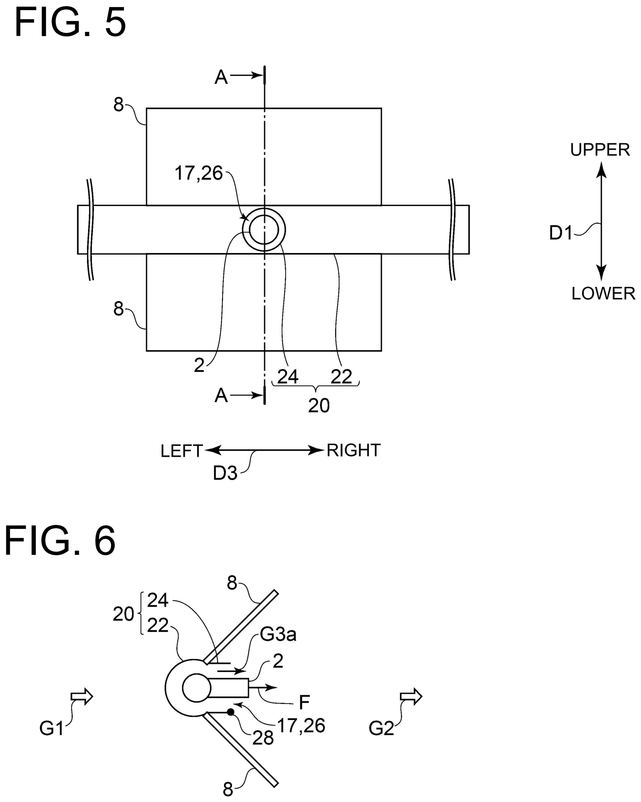

FIG. 5 is a schematic diagram of a configuration example of the exhaust gas pipe 20, as viewed from the downstream side of the exhaust gas passage 120. FIG. 6 is a schematic cross-sectional view as viewed from the direction of arrows A-A in FIG. 5. As shown in FIGs. 5 and 6, the exhaust gas pipe 20 has a header part 22 and a protruding part 24.

The header part 22 extends along the lateral direction D3. The protruding part 24 protrudes from the header part 22 toward the downstream side of the exhaust gas passage 120. The protruding part 24 surrounds the outer periphery of the nozzle 2. The protruding part 24 has an opening 26 that opens toward the downstream side of the exhaust gas passage 120 as the outlet 17 of the exhaust gas circulation line 14. The tip 28 of the protruding part 24 (one end on the downstream side of the exhaust gas passage 120) is located upstream of the injection hole of the nozzle 2 in the exhaust gas passage 120.

According to the embodiment shown in FIG. 5, since the outlet 17 of the exhaust gas circulation line 14 is located near the injection hole of the nozzle 2, the circulating exhaust gas G3a can be quickly mixed with the gas fuel F.

### <Second Embodiment>

The duct burner 1 according to the second embodiment will be described. The duct burner 1 according to the second embodiment differs from the first embodiment in that the gas fuel F contains hydrocarbon gas, and the nozzle 2 further includes a main hole 40 and an auxiliary hole 42. In the second embodiment, the same constituent elements as those in the first embodiment are associated with the same reference characters and thus not described again in detail.

### (Configuration)

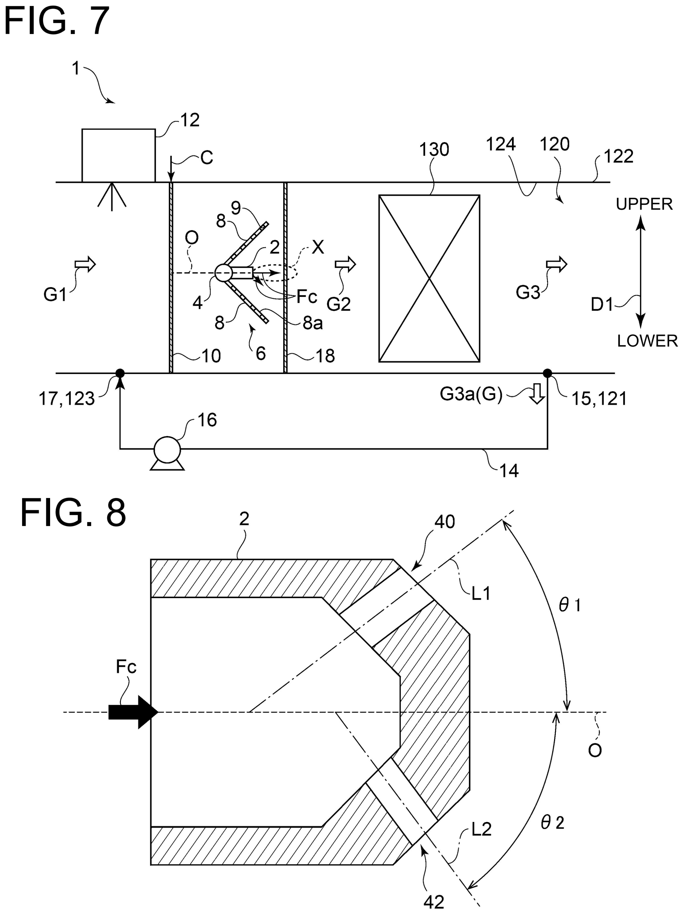

FIG. 7 is a schematic configuration diagram of the duct burner 1 according to the second embodiment. The duct burner 1 includes a nozzle 2 for injecting gas fuel Fc containing hydrocarbon gas into the exhaust gas passage 120. The gas fuel Fc is, for example, LPG or LNG.

FIG. 8 is a schematic configuration diagram of the nozzle 2 according to the second embodiment. As shown in FIG. 8, in the second embodiment, the nozzle 2 has a main hole 40 configured to inject the gas fuel Fc and an auxiliary hole 42 that is smaller in diameter than the main hole 40. The auxiliary hole 42 is configured to inject the gas fuel F at an inclination away from the central axis O of the nozzle 2 relative to the main hole 40. The auxiliary hole 42 is configured to inject the fuel along a flame holding surface 8a of the plate members 8 on the downstream side of the exhaust gas passage 120.

A specific configuration example of the main hole 40 and the auxiliary hole 42 will be described. Each of the main hole 40 and the auxiliary hole 42 extends in a straight line. The angle formed by the imaginary first line L1 extending in the injection direction of the main hole 40 and the central axis O of the nozzle 2 is the main hole injection angle θ1. The angle formed by the imaginary second line L2 extending in the injection direction of the auxiliary hole 42 and the central axis O of the nozzle 2 is the auxiliary hole injection angle θ2. The main hole injection angle θ1 is not less than 20 degrees and less than 40 degrees. The auxiliary hole injection angle θ2 is not less than 40 degrees and less than 50 degrees.

### (Operation and Effect)

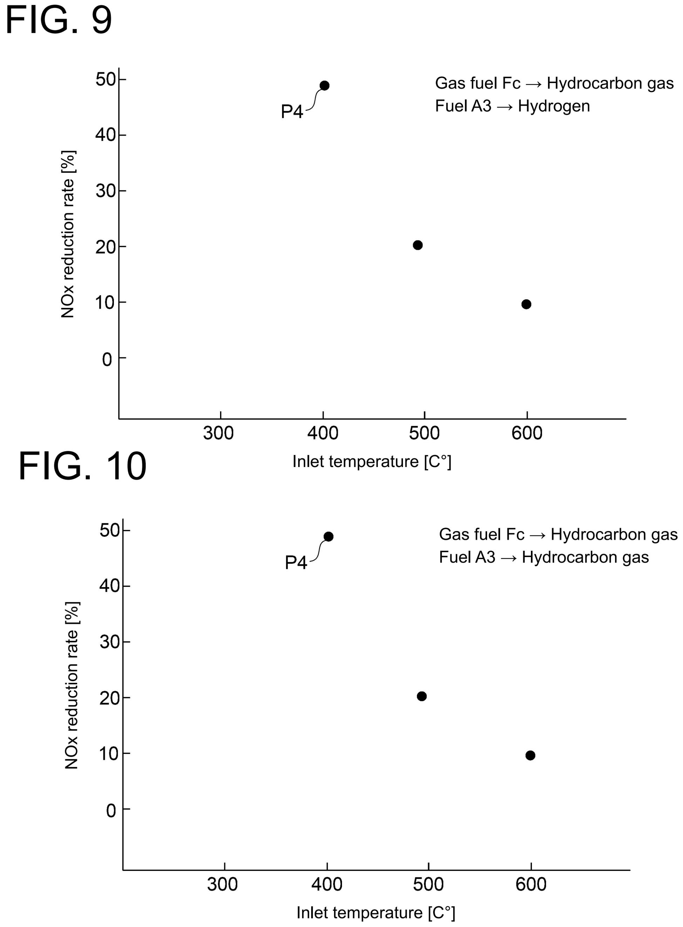

The operation and effect of the duct burner 1 according to the second embodiment will be described. FIG. 9 is a graph showing a relationship between inlet temperature and NOx reduction rate, with the horizontal axis representing inlet temperature and the vertical axis representing NOx reduction rate. In FIG. 9, P4 has an oxygen concentration of approximately 12%.

The present inventors have found that, as shown in FIG. 9, when combustion heating is performed by injecting the gas fuel Fc containing hydrocarbon gas into the exhaust gas G having a temperature of 500°C or lower and an oxygen concentration of 14% or less, the amount of NOx in the inlet exhaust gas G1 is reduced. However, hydrocarbon gas burns at a lower rate than hydrogen and has inferior ignition and combustion properties. Therefore, the combustion in the duct burner 1 may not be stable with the inlet exhaust gas G1 under the above conditions.

According to the second embodiment, the main hole 40 injects the gas fuel F at an inclination toward the central axis O of the nozzle 2 relative to the auxiliary hole 42, which promotes slow combustion due to long flame, enabling stable combustion in the duct burner 1. Therefore, even if the gas fuel Fc containing hydrocarbon gas is used, it is possible to provide a duct burner 1 that can reduce the amount of NOx in the inlet exhaust gas G1.

In the second embodiment, the fuel A3 of the gas turbine 110 is hydrogen gas, but it may be hydrocarbon gas, such as LPG. FIG. 10 is a graph showing a relationship between inlet temperature and NOx reduction rate, with the horizontal axis representing inlet temperature and the vertical axis representing NOx reduction rate. In FIG. 10, P5 has an oxygen concentration of approximately 8.5%, and P6 has approximately 13%. The present inventors have found that, as shown in FIG. 10, even if the fuel A3 is hydrocarbon gas, when combustion heating is performed by injecting the gas fuel Fc containing hydrocarbon gas into the exhaust gas G having a temperature of 500°C or lower and an oxygen concentration of 14% or less, the amount of NOx in the inlet exhaust gas G1 is reduced. Therefore, even if the fuel A3 of the gas turbine 110 is hydrocarbon gas, and the gas fuel Fc containing hydrocarbon gas is used, it is possible to provide a duct burner 1 that can reduce the amount of NOx in the inlet exhaust gas G1.

### <Combustion method for duct burner>

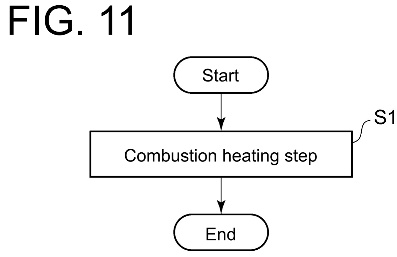

The combustion method for the duct burner 1 using the duct burner 1 according to the first embodiment will be described. FIG. 11 is a flowchart of the combustion method for the duct burner 1. As shown in FIG. 11, the combustion method for the duct burner 1 includes a combustion heating step S1 of forming a flame X by injecting gas fuel F into exhaust gas G discharged from the gas turbine 110 and having a temperature of 500°C or lower and an oxygen concentration of 14% or less. With this method, it is possible to reduce the amount of NOx in the exhaust gas G. The above-described combustion method for the duct burner 1 may be implemented using the duct burner 1 according to the second embodiment.

The contents described in the above embodiments would be understood as follows, for instance.
[1] A duct burner (1) according to the present disclosure is disposed in an exhaust gas passage (120) through which exhaust gas (G) discharged from a gas turbine (110) flows and configured such that the exhaust gas having a temperature of 500°C or lower and an oxygen concentration of 14% or less flows in. The duct burner includes a nozzle (2) for injecting gas fuel (F) containing hydrogen into the exhaust gas passage.

The present inventors have found that, when combustion heating is performed by injecting the gas fuel containing hydrogen into the exhaust gas having a temperature of 500°C or lower and an oxygen concentration of 14% or less, the amount of nitrogen oxides in the exhaust gas is reduced. Therefore, with the above configuration [1], it is possible to provide a duct burner that can reduce the amount of nitrogen oxides in the exhaust gas.

[2] In some embodiments, in the above configuration [1], the duct burner further includes a heat transfer tube (10) which is disposed upstream of the nozzle in the exhaust gas passage and through which a coolant (C) colder than the exhaust gas flows.

With the above configuration [2], the temperature of the exhaust gas can be lowered to 500°C or lower before the exhaust gas is heated by combustion with the gas fuel.

[3] In some embodiments, in the above configuration [1] or [2], the duct burner further includes a spraying device (12) disposed upstream of the nozzle in the exhaust gas passage and configured to spray water (W) or steam to the exhaust gas.

With the above configuration [3], the temperature of the exhaust gas can be lowered to 500°C or lower before the exhaust gas is heated by combustion with the gas fuel.

[4] In some embodiments, in any one of the above configurations [1] to [3], a heat recovery steam generator (130) is disposed downstream of the nozzle in the exhaust gas passage to generate steam using the exhaust gas. The duct burner further includes an exhaust gas circulation line (14) for guiding part (G3a) of the exhaust gas from a portion of the exhaust gas passage downstream of the heat recovery steam generator to a portion of the exhaust gas passage upstream of the nozzle.

With the above configuration [4], the oxygen concentration of the exhaust gas can be reduced to 14% or less before the exhaust gas is heated by combustion with the gas fuel.

[5] In some embodiments, in the above configuration [4], the exhaust gas circulation line includes an exhaust gas pipe (20) located inside the exhaust gas passage and having an outlet (17) of the exhaust gas circulation line.

The duct burner combusts and heats part of the exhaust gas flowing through the exhaust gas passage. With the above configuration [5], by placing the outlet of the exhaust gas circulation line at any position in the exhaust gas passage, the oxygen concentration in the part of the exhaust gas that is subject to combustion heating by the duct burner can be efficiently reduced to 14% or less.

[6] In some embodiments, in the above configuration [5], the exhaust gas pipe includes a header part (22), and a protruding part (24) protruding from the header part and surrounding an outer periphery of the nozzle. The protruding part has an opening (26) that opens toward a downstream side of the exhaust gas passage as the outlet of the exhaust gas circulation line.

With the above configuration [6], the exhaust gas that has passed through the heat recovery steam generator can be quickly mixed with the gas fuel.

[7] In some embodiments, in any one of the above configurations [1] to [6], the duct burner further includes a contact pipe (18) disposed transversely to a flame (X) formed by combustion of the gas fuel.

With the above configuration [7], the flame temperature can be lowered by bringing the flame into contact with the contact pipe to suppress the generation of NOx due to combustion heating by the duct burner.

[8] In some embodiments, in any one of the above configurations [1] to [7], the exhaust gas has an oxygen concentration of 10% or less.

With the above configuration [8], it is possible to provide a duct burner that can further reduce the amount of nitrogen oxides in the exhaust gas.

[9] A duct burner (1) according to the present disclosure is disposed in an exhaust gas passage (120) through which exhaust gas (G) discharged from a gas turbine (110) and having a temperature of 500°C or lower and an oxygen concentration of 14% or less flows. The duct burner includes a nozzle (2) for injecting gas fuel (Fc) containing hydrocarbon gas into the exhaust gas passage, and the nozzle has: a main hole (40) configured to inject the gas fuel; and an auxiliary hole (42) having a smaller diameter than the main hole and configured to inject the gas fuel at an inclination away from a central axis (O) of the nozzle relative to the main hole.

The present inventors have found that, when combustion heating is performed by injecting the gas fuel containing hydrocarbon gas into the exhaust gas having a temperature of 500°C or lower and an oxygen concentration of 14% or less, the amount of nitrogen oxides in the exhaust gas is reduced. However, hydrocarbon gas burns at a lower rate than hydrogen and has inferior ignition and combustion properties. Therefore, the combustion in the duct burner may not be stable with the exhaust gas under the above conditions.

With the above configuration [9], the main hole injects the gas fuel at an inclination toward the central axis of the nozzle relative to the auxiliary hole, which promotes slow combustion due to long flame, enabling stable combustion in the duct burner. Therefore, even if the gas fuel containing hydrocarbon gas is used, it is possible to provide a duct burner that can reduce the amount of nitrogen oxides in the exhaust gas.

[10] A gas turbine system (100) according to the present disclosure includes a gas turbine (110) using hydrogen gas as fuel; and the duct burner (1) described in any one of [1] to [9].

With the above configuration [10], it is possible to provide a gas turbine system with a duct burner that can reduce the amount of nitrogen oxides in the exhaust gas.

[11] A combustion method for a duct burner according to the present disclosure includes a step (S1) of forming a flame (X) by injecting gas fuel (F) into exhaust gas (G) discharged from a gas turbine (110) and having a temperature of 500°C or lower and an oxygen concentration of 14% or less.

With the above method [11], it is possible to reduce the amount of nitrogen oxides in the exhaust gas.

### Reference Signs List

- 1: Duct burner
- 2: Nozzle
- 4: Fuel supply pipe
- 6: Flame holder
- 8: Plate members
- 8a: Flame holding surface
- 9: Through hole
- 10: Heat transfer tube
- 12: Spraying device
- 14: Exhaust gas circulation line
- 15: Inlet of exhaust gas circulation line
- 17: Outlet of exhaust gas circulation line
- 18: Contact pipe
- 20: Exhaust gas pipe
- 22: Header part
- 24: Protruding part
- 26: Opening of protruding part
- 28: Tip of protruding part
- 40: Main hole
- 42: Auxiliary hole
- 100: Gas turbine system
- 110: Gas turbine
- 112: Compressor
- 113: Rotational shaft
- 114: Combustor
- 116: Turbine
- 120: Exhaust gas passage
- 121: Portion of exhaust gas passage downstream of heat recovery steam generator
- 122: Duct
- 123: Portion of exhaust gas passage upstream of nozzle
- 124: Inner wall surface of duct
- 130: Heat recovery steam generator
- 140: Generator
- A2: Air
- A2: Compressed air
- A3: Fuel
- A4: Combustion gas
- C: Coolant
- D1: Vertical direction
- D2: Radial direction
- D3: Lateral direction
- F: Gas fuel (Hydrogen)
- Fc: Gas fuel (Hydrocarbon gas)
- G: Exhaust gas
- G1: Inlet exhaust gas
- G2: Outlet exhaust gas
- G3: Heat-recovered exhaust gas
- G3a: Circulating exhaust gas
- L1: First line
- L2: Second line
- O: Central axis
- S1: Combustion heating step
- W: Water
- X: Flame

## Claims

1. A duct burner disposed in an exhaust gas passage through which exhaust gas discharged from a gas turbine flows and configured such that the exhaust gas having a temperature of 500°C or lower and an oxygen concentration of 14% or less flows in, the duct burner comprising
a nozzle for injecting gas fuel containing hydrogen into the exhaust gas passage.

2. The duct burner according to claim 1, further comprising a heat transfer tube which is disposed upstream of the nozzle in the exhaust gas passage and through which a coolant colder than the exhaust gas flows.

3. The duct burner according to claim 1 or 2, further comprising a spraying device disposed upstream of the nozzle in the exhaust gas passage and configured to spray water or steam to the exhaust gas.

4. The duct burner according to claim 1 or 2,
wherein a heat recovery steam generator is disposed downstream of the nozzle in the exhaust gas passage to generate steam using the exhaust gas, and
wherein the duct burner further comprises an exhaust gas circulation line for guiding part of the exhaust gas from a portion of the exhaust gas passage downstream of the heat recovery steam generator to a portion of the exhaust gas passage upstream of the nozzle.

5. The duct burner according to claim 4,
wherein the exhaust gas circulation line includes an exhaust gas pipe located inside the exhaust gas passage and having an outlet of the exhaust gas circulation line.

6. The duct burner according to claim 5,
wherein the exhaust gas pipe includes a header part, and a protruding part protruding from the header part and surrounding an outer periphery of the nozzle, and
wherein the protruding part has an opening that opens toward a downstream side of the exhaust gas passage as the outlet of the exhaust gas circulation line.

7. The duct burner according to claim 1 or 2, further comprising a contact pipe disposed transversely to a flame formed by combustion of the gas fuel.

8. The duct burner according to claim 1 or 2,
wherein the exhaust gas has an oxygen concentration of 10% or less.

9. A duct burner disposed in an exhaust gas passage through which exhaust gas discharged from a gas turbine and having a temperature of 500°C or lower and an oxygen concentration of 14% or less flows, the duct burner comprising
a nozzle for injecting gas fuel containing hydrocarbon gas into the exhaust gas passage,
wherein the nozzle has:
a main hole configured to inject the gas fuel; and
an auxiliary hole having a smaller diameter than the main hole and configured to inject the gas fuel at an inclination away from a central axis of the nozzle relative to the main hole.

10. A gas turbine system, comprising:
a gas turbine using hydrogen gas as fuel; and
the duct burner according to claim 1 or 2.

11. A combustion method for a duct burner, comprising
a step of forming a flame by injecting gas fuel into exhaust gas discharged from a gas turbine and having a temperature of 500°C or lower and an oxygen concentration of 14% or less.
